(19)

Europäisches
Patentamt

European
Patent Office

Office européen
des brevets

(11) **EP 4 760 484 A1**

(12) **EUROPEAN PATENT APPLICATION**

(43) Date of publication:
**17.06.2026 Bulletin 2026/25**

(51) International Patent Classification (IPC):
**G06F 7/58** (2006.01)     **G06F 7/70** (2006.01)

(21) Application number: **24219490.0**

(22) Date of filing: **12.12.2024**

(52) Cooperative Patent Classification (CPC):
**G06F 7/58; G06F 7/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Imec VZW**
**3001 Leuven (BE)**

(72) Inventors:
• **GAMAGE, Sahan**
  **Cambridge, CB1 8NJ (GB)**
• **GARCIA REDONDO, Fernando**
  **Cambridge, CB43NG (GB)**

(74) Representative: **Winger**
**Mouterij 16 bus 101**
**3190 Boortmeerbeek (BE)**

(54) **SYSTEM FOR GENERATING PROBABILITY STREAMS**

(57) The invention relates to a system (100) for generating multiple probability streams with varying probabilities for stream processing applications. The system comprises at least one probabilistic bit (110) configured to produce a fixed probability output and a digital logic circuit (120) designed to process the outputs from the probabilistic bit. The digital logic circuit performs logic operations to transform the fixed probability outputs into multiple streams with different probabilities. This approach reduces the complexity associated with analog control of probabilistic bits by shifting the probability adjustment to the digital domain. The system enables efficient and scalable probability stream generation suitable for applications such as stochastic computing, bit stream computing, and neural networks. Its versatility and reduced hardware requirements make it an ideal solution for error-tolerant stream processing tasks, providing a balance between accuracy, speed, and implementation simplicity.

FIG. 3

**Description**

**Field of the invention**

The invention relates to the field of stream processing and stochastic computing. More specifically, it relates to a system and method for generating probability streams with different probabilities.

**Background of the invention**

Random number generation (RNG) is a critical component in numerous modern computational and data processing applications, including cryptography, simulations, and machine learning. Efficient and high-throughput RNG is particularly essential in emerging fields such as stochastic computing (SC), bit stream computing (BSC), and spike-based neural networks. These applications often require multiple streams of random bits with specific probability distributions to perform computations in a probabilistic domain.

Traditional RNG methods, especially those based on software or large-scale hardware, face limitations in speed, scalability, and energy efficiency. As a result, there is a growing focus on using novel hardware technologies to implement compact, high-performance RNG systems. Spintronic devices, such as magnetic tunnel junctions (MTJs) within magnetoresistive random access memory (MRAM), have emerged as promising candidates for generating random bits. These devices exploit the stochastic behavior of magnetization switching in the magnetic free layer of an MTJ, driven by thermal noise and spin torques.

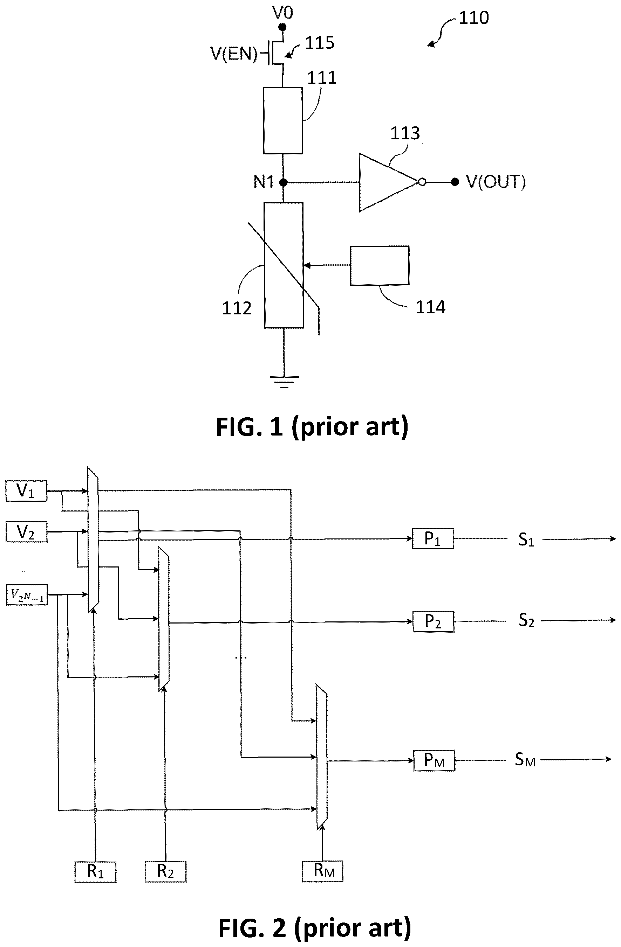

FIG. 1 shows an example of a probabilistic bit (110), also referred to as a p-bit, capable of generating random bits with tunable expectancy. In this example the device (110) includes a voltage divider circuit with a reference resistance (111) and a switchable magnetoresistance (112), where the latter is composed of one or more MTJs arranged in a multilayer stack. The free layer of each MTJ exhibits interfacial perpendicular magnetic anisotropy (PMA) that can be modulated by an electric field (via the voltage-controlled magnetic anisotropy, or VCMA, effect). By appropriately biasing the device, the energy barrier between the two bistable magnetization states of the free layer can be fully eliminated, enabling thermally driven stochastic switching.

The output of the probabilistic bit (110) is a random binary signal processed by a readout circuit (113), which converts the thermal voltage fluctuations at the sense node of the voltage divider into a digital output signal suitable for use in downstream applications. In this example the device (110) also includes control circuitry (114) to tune the mean value of the random bit stream by applying a spin-transfer torque (STT) or spin-orbit torque (SOT). An optional switching element (115) is provided to disconnect the voltage divider circuit from the supply voltage when the device is not in use, thereby saving energy and extending the lifetime of the MTJ components. It is noted that also other implementations of p-bits are possible.

Applications of such p-bits include stochastic computations, where systems are designed to tolerate minor probabilistic errors. For example, in SC and BSC, computational operations are performed on streams of random bits. However, generating random bit streams with specific probabilities poses challenges, as traditional methods require precise analog control, such as varying the operating voltage of each p-bit.

This is for example illustrated in FIG. 2. The streams with specific probabilities required for SP applications are traditionally generated by tuning p-bits to those probabilities, often achieved by supplying a specific voltage to each p-bit ($P_1$ to $P_M$), as shown conceptually in FIG. 2, which represents a prior art setup. In such systems, each unique probability stream requires a distinct operating voltage, and for a given SP application where probabilities are encoded with N bits and up to M streams ($S_1$ to $S_M$) are needed, the setup typically requires M p-bits, with $2^N$-1 supplies for each p-bit, and probability requests $R_1$ to $R_M$. This analog control approach, particularly when implemented with multiple voltage supplies, introduces significant complexity, including challenges in routing, design layout, leakage power consumption, area inefficiency, and limited operational speed due to the need for reprogramming p-bits for new probabilities.

This analog complexity introduces design, routing, and energy inefficiencies, particularly when scaling to high bit precisions or large numbers of independent streams. Efforts are, therefore, required to address these challenges.

**Summary of the invention**

It is an object of embodiments of the present invention to provide a good system and method for generating a plurality of probability streams with different probabilities for a stream processing application.

The above objective is accomplished by a method and device according to the present invention.

In a first aspect embodiments of the present invention relate to a system for generating a plurality of probability streams with different probabilities for a stream processing application.

The system comprises at least one probabilistic bit configured to produce a fixed probability output, and a digital logic circuit configured to receive outputs from the at least one probabilistic bit and to perform logic operations on the outputs to obtain the plurality of probability streams.

In embodiment of the present invention the logic operations are selected from AND, OR, and NOT operations.

It is an advantage of embodiments of the present invention that the system can generate the probability streams with different probabilities while significantly reducing analog control compared to a system which does not use the digital control circuit. The analog control can be reduced to a few or even one fixed probability output. This is possible because in the present invention the probability adjustments are shifted to the digital domain.

In embodiments of the present invention the probability streams generated by the digital logic circuit are used for applications that can tolerate minor probabilistic variances such as stochastic computing or bit stream computing applications.

In embodiments of the present invention the system comprises at least two probabilistic bits configured to produce outputs with different or the same fixed probabilities and the digital logic circuit is configured to receive outputs from the at least two probabilistic bits and perform logic operations on them.

It is an advantage of embodiments of the present invention that a correlation which may be present between outputs from the same probabilistic bit, is avoided from different probabilistic bits. In embodiments of the present invention the different probabilistic bits may have the same probability output which reduces the complexity of the analog circuitry.

In embodiments of the present invention the digital logic circuit comprises a FIFO buffer configured to receive the output from the at least one probabilistic bit and use the output of the FIFO buffer to perform the logic operations.

It is an advantage of embodiments of the present invention that the number of probabilistic bits can be reduced by enabling reuse of the generated output of a probabilistic bit.

In embodiments of the present invention the digital logic circuit comprises a shuffler or XOR circuit coupled to the FIFO buffer.

It is an advantage of embodiments of the present invention that additional randomness can be introduced into the reused outputs.

In embodiments of the present invention the digital logic circuit comprises at least one scaler-shifter circuit that shifts and scales the fixed probability output of the at least one probabilistic bit.

In embodiments of the present invention the digital logic circuit comprises a plutality of scaler-shifter circuits which are connected in series.

In embodiments of the present invention the system comprises a stream processing module configured to utilize the plurality of probability streams generated by the digital logic circuit.

It is an advantage of embodiments of the present invention that stochastic computations, including stochastic computing, bit stream computing, or spike-based neural network processing are enabled using the stream processing module.

It is an advantage of embodiments of the present invention that the stream processing module directly integrates with the stream processing module.

The system is configured generating the plurality of probability streams required by the stream processing module. A system in accordance with embodiments of the present invention may take advantage of the error tolerance nature of SP streams.

In embodiments of the present invention the digital logic circuit is reconfigurable such that different probability streams can be obtained.

In embodiments of the present invention the at least one probabilistic bit has the fixed probability output of 0.5.

In a second aspect embodiments of the present invention relate to a method for generating a plurality of probability streams with different probabilities. This plurality of probability streams may be used in a stream processing application.

The method comprises generating at least one fixed probability output using at least one probabilistic bit and performing logic operations on the at least one fixed probability output using a digital logic circuit to obtain the plurality of probability streams with different probabilities. In embodiments of the present invention the logic operations may be selected from AND, OR, and NOT operations.

In embodiments of the present invention the method comprises storing outputs from the at least one probabilistic bit in a FIFO buffer, and using the output of the FIFO buffer to perform the logic operations.

In embodiments of the present invention the method comprises applying a shuffler or XOR circuit to the stored outputs.

In embodiments of the present invention the method comprises applying a scaler-shifter operation to the at least one fixed probability output.

It is an advantage of embodiments of the present invention that an arbitrary probability stream of a given precision can be generated.

In embodiments of the present invention the method comprises providing the generated plurality of probability streams to a stream processing module, and performing stochastic computations using the plurality of probability streams.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

Brief description of the drawings

FIG. 1 shows a schematic drawing of an exemplary probabilistic bit.

FIG. 2 shows a schematic drawing of a prior art system comprising a plurality of analog supplies which are multiplexed for each p-bit.

FIG. 3 shows a system for generating a plurality of probability streams with different probabilities for a stream processing application using a simplified single-supply p-bit scheme, in accordance with embodiments of the present invention.

FIG. 4 shows a system wherein the logic circuit comprises FIFO buffers in accordance with embodiments of the present invention.

FIG. 5 shows a graph illustrating a performance comparison between independent p-bits per stream and a single p-bit per stream.

FIG. 6 shows a schematic drawing of a system comprising scaler-shifter circuits, in accordance with embodiments of the present invention.

FIG. 7 shows a schematic drawing of a simplified system comprising scaler-shifter circuits, in accordance with embodiments of the present invention.

FIG. 8 shows the error in probabilities achieved with a system comprising a scaler shifter for a 4 bit case, in accordance with embodiments of the present invention.

FIG. 9 shows a schematic drawing of a system with single supply p-bit scheme for a stream processing application comprising a plurality of scalar shifters, in accordance with embodiments of the present invention.

FIG. 10 shows a flow chart of an exemplary method in accordance with embodiments of the present invention.

Any reference signs in the claims shall not be construed as limiting the scope. In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to stream processing (SP) applications, reference is made to Stochastic Computing (SC), Bit Stream Computing (BSC), spike-based neural networks, and other error-tolerant computational frameworks that utilize probabilistic streams for processing or decision-making tasks.

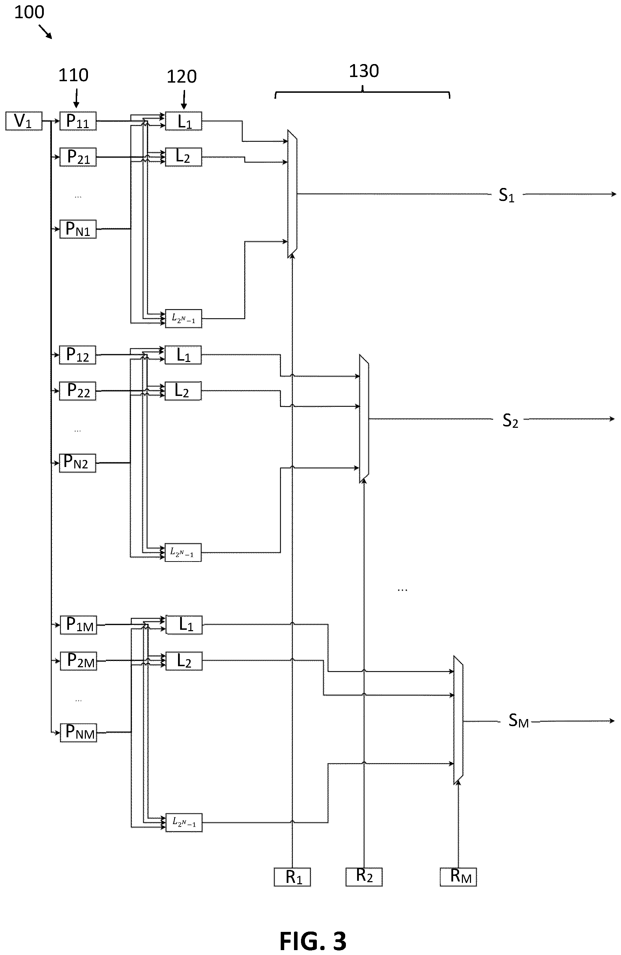

In a first aspect embodiments of the present invention relate to a system (100) for generating multiple probability streams with varying probabilities for stream processing applications. The system comprises at least one probabilistic bit (110) configured to produce a fixed probability output and a digital logic circuit (120) designed to receive the outputs from the probabilistic bit (110) and perform logic operations to generate the probability streams. Examples of such a system (100) are illustrated in FIG. 3, FIG. 4, FIG. 6, FIG 7, and FIG. 9. In embodiments of the present invention the system (100) comprises a stream processing module (130) configured to utilize the plurality of probability streams generated by the digital logic circuit (120).

In embodiments of the present invention the digital logic circuit (120) is reconfigurable such that different probability streams can be obtained.

This invention is not limited to voltage-controlled p-bits (e.g. MRAM-based devices) but is compatible with any p-bit technology (including SRAM) or any 1-bit RNG. Examples of p-bits include spintronic p-bits, RRAM-based p-bits, CMOS-based p-bits, PCM-based p-bits, stochastic MTJs, optoelectronic p-bits, and neuromorphic p-bits. In embodiments of the present invention these p-bits may have a probability of 0.5.

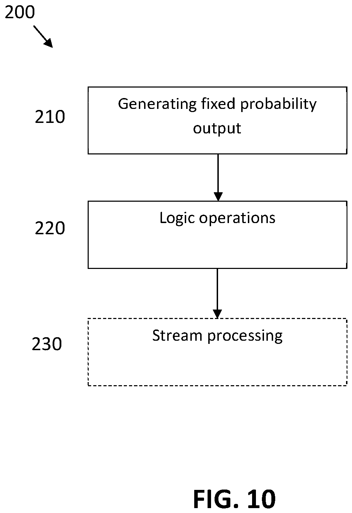

In a second aspect embodiments of the present invention relate to a method (200) for generating a plurality of probability streams with different probabilities in a stream processing application. The method (200) comprises generating (210) at least one fixed probability output using at least one probabilistic bit (110) and performing (220) logic operations on the at least one fixed probability output using a digital logic circuit (120) to obtain the plurality of probability streams with different probabilities. FIG. 10 shows a flow chart of an exemplary method in accordance with embodiments of the present invention. In embodiments of the present invention the method (200) comprises stream processing (230) the plurality of probability streams generated by the digital logic circuit (120) and performing stochastic computations using the plurality of probability streams.

In embodiments of the present invention the system comprises at least two probabilistic bits (110) configured to produce outputs with different or the same fixed probabilities. The digital logic circuit (120) is configured to receive outputs from the at least two probabilistic bits (110) and perform logic operations on them.

In embodiments of the present invention the at least one probabilistic bit (110) has the fixed probability output of 0.5. A probability of 0.5 is a convenient value since binary probabilities are encoded as powers of 0.5.

In embodiments of the present invention the required programmable probabilities are produced in stream processing itself by the digital logic circuit (120).

In embodiments of the present invention this is achieved by performing logic operations on the outputs.

If a stream $X_1$ has a probability $p_1$ of producing a '1' on average, represented as $X_1 \sim p_1$, and another stream $X_2 \sim p_2$, then applying basic logic operations to these streams results in transformed probabilities as follows:

- $NOT(X_1) \sim 1-p_1$
- $AND(X_1,X_2) \sim p_1 \cdot p_2$
- $OR(X_1,X_2) \sim p_1+p_2-p_1 \cdot p_2$

In embodiments of the present invention these logic functions are used to produce desired probabilities. Such a system or method has the additional advantage that it naturally fits to the general SP calculation structure.

In embodiments of the present invention the probability requirement is encoded using N-bit precision, with the probability $f$ expressed as $f = \sum_{i=0}^{N-1} F(i) 2^i / 2^N$, where $F$ represents an n-bit binary number. In such embodiments the following logic-probability relationships can be used:

$$1. \quad NOT(X1) \sim 1 - f_1 = \frac{(\overline{F_1}+1)}{2^N} = \frac{2scomp(F_1)}{2^N}$$

$$2. \quad AND\ (X1, X2) \sim f_1 f_2 = F_1 F_2 / 2^{2N}$$

$$3. \quad OR(X1, X2) \sim f_1 + f_2 - f_1 f_2 = (F_1 2^N + F_2 2^N + F_1 F_2)/2^{2N}$$

where 2*scomp* represents the two's complement operation on the binary number. Various F values can be manipulated using simple logic gate circuits to derive other probabilities and corresponding streams.

An illustration using N=4 is given in the examples below.

0001b => ~*AND*(0.5,0.5,0.5,0.5) *p-bits x4*

This is a 4-bit binary representation of the probability request, which corresponds to a probability of $f=1/2^4=0.0625$. The requested probability of 0.0625 is generated by performing an *AND* operation on four independent p-bits, each configured to produce a fixed probability output of 0.5. This process uses 4 independent bits and can be used when a probability stream is required with a probability of about 0.0625.

0010b => ~*AND*(0.5,0.5,0.5) *p-bits x3*

This is a 4-bit binary representation of the probability request, which corresponds to a probability of $f=2/2^4=0.125$. The requested probability of 0.125 is generated by performing an *AND* operation on three independent p-bits, each configured to produce a fixed probability output of 0.5.

$$0011b \Rightarrow 1000b * 0110b \Rightarrow \ \sim AND\left(0.5, AND\left(0.5, NOT\left(AND(0.5, 0.5)\right)\right)\right) \text{ p-bits x4}$$

This is a 4-bit binary representation of the probability request, corresponding to a probability of $f=3/2^4=0.1875$. The requested probability of 0.1875 is generated using a sequence of operations:

1. AND(0.5, 0.5): Combines two independent p-bits with a fixed probability of 0.5 each, producing a probability of 0.5×0.5=0.25.
2. NOT(AND(0.5, 0.5)): Applies a NOT operation to invert the result, producing 1-0.25=0.75.
3. AND(0.5, NOT(...)): Combines another p-bit with the inverted result, yielding 0.5×0.75=0.375.
4. AND(0.5, ...): Finally, the result is ANDed with an additional p-bit, resulting in 0.5×0.375=0.1875.

This process uses 4 independent p-bits, each with a fixed output probability of 0.5, to generate the desired probability of 0.1875. This process can be used when a probability stream is required which has a probability of about 0.1875.

$$0100b \Rightarrow \frac{1000b * 1000b}{2^8} \Rightarrow 0100b \sim AND(0.5, 0.5) \text{ p-bits x2}$$

This is a 4-bit binary representation of the probability request, corresponding to a probability of $f=4/2^4=0.25$. The requested probability of 0.25 is generated by performing an AND operation on two independent p-bits, each configured to produce a fixed probability output of 0.5:

1. AND(0.5, 0.5): Combines two p-bits, resulting in a probability of 0.5×0.5=0.25.
2. The division by $2^8$ in the intermediate step ensures proper scaling.

This operation uses 2 p-bits to generate the required stream with a probability of 0.25.

$$0101b \Rightarrow 1000b * 1010b \Rightarrow \ \sim AND\left(0.5, OR\left(0.5, AND(0.5, 0.5)\right)\right) \text{ p-bits x4}$$

This is a 4-bit binary representation of the probability request, corresponding to a probability of $f=5/2^4=0.3125$. The requested probability of 0.3125 is generated using the following steps:

1. AND(0.5, 0.5): Combines two independent p-bits, each with a fixed probability of 0.5, resulting in a probability of 0.5×0.5=0.25.
2. OR(0.5, AND(0.5, 0.5)): Combines another p-bit (probability 0.5) with the result from the AND operation, using the OR logic: P(OR)=P(0.5)+P(0.25)-P(0.5)-P(0.25)=0.5+0.25-(0.5-0.25)=0.625
3. AND(0.5, OR(...)): Combines the OR result with another p-bit using an AND operation: P(AND)=0.5·0.625=0.3125

This process uses 4 independent p-bits, each with a fixed probability of 0.5, to generate the desired stream with a probability of 0.3125.

$$0110b \Rightarrow 1000b * 1100b \Rightarrow \ {\sim}AND\big(0.5, NOT\big(AND(0.5, 0.5)\big)\big) \ \textit{p-bits x3}$$

This is a 4-bit binary representation of the probability request, corresponding to a probability of $f=6/2^4=0.375$. The requested probability of 0.375 is generated as follows:

1. AND(0.5, 0.5): Combines two independent p-bits with fixed probabilities of 0.5, resulting in 0.5×0.5=0.25.
2. NOT(AND(0.5, 0.5)): Applies a NOT operation to the result of the AND, producing 1-0.25=0.75.
3. AND(0.5, NOT(...)): Combines another p-bit with the NOT result using an AND operation: P(AND)=0.5·0.75=0.375

This process uses 3 independent p-bits, each with a fixed probability of 0.5, to generate the probability stream with a probability of 0.375.

$$0111b = 1000b * 1110b \Rightarrow \ {\sim}AND\big(0.5, NOT\big(AND(0.5, 0.5, 0.5, 0.5)\big)\big) \ \textit{p-bits x4}$$

This is a 4-bit binary representation of the probability request, corresponding to a probability of $f=7/2^4$. The requested probability of 0.4375 is generated as follows:

1. AND(0.5, 0.5, 0.5, 0.5): Combines four independent p-bits, each with a fixed probability of 0.5, resulting in $0.5^4=0.0625$.
2. NOT(AND(...)): Applies a NOT operation to the result of the AND, producing 1-0.0625=0.9375.
3. AND(0.5, NOT(...)): Combines another p-bit (probability 0.5) with the NOT result using an AND operation: P(AND) =0.5·0.9375=0.4375

This process uses 4 independent p-bits, each configured with a fixed probability of 0.5, to generate a stream with a probability of 0.4375.

1000b ~ 0.5 *p-bit*

This is a 4-bit binary representation of the probability request, corresponding to a probability of $f=8/2^4$. The requested probability of 0.5 is directly generated by a single p-bit configured to produce a fixed probability output of 0.5.

$$1001b = \overline{0111b} + 1 \Rightarrow \ {\sim}NOT\big(AND\big(0.5, NOT\big(AND(0.5, 0.5, 0.5, 0.5)\big)\big)\big) \ \textit{p-bits x4}$$

This is a 4-bit binary representation of the probability request, corresponding to a probability of $f=9/2^4=0.5625$. The requested probability of 0.5625 is generated as follows:

1. AND(0.5, 0.5, 0.5, 0.5): Combines four independent p-bits, each configured to produce a fixed probability of 0.5, resulting in $0.5^4=0.06250$.
2. NOT(AND(...)): Applies a NOT operation to invert the result, yielding 1-0.0625=0.9375.
3. AND(0.5, NOT(...)): Combines another p-bit (probability 0.5) with the NOT result using an AND operation: P(AND) =0.5·0.9375=0.4375.
4. NOT(...)+1: Applies a NOT operation to the result (flipping the bits of 0111b) and adds 1, effectively creating a two's complement operation to generate the next higher probability. This results in 1-0.4375=0.5625.

This process uses 4 independent p-bits with fixed probabilities of 0.5 to generate a stream with a probability of 0.5625.

$$1010b = 1000b + 0100b - 0010b \Rightarrow \ {\sim}OR(0.5, AND(0.5,0.5)) \ \textit{p-bits x3}$$

This is a 4-bit binary representation of the probability request, corresponding to a probability of $f=10/2^4=0.625$. The requested probability of 0.625 is generated as follows:

1. AND(0.5, 0.5): Combines two independent p-bits, each with a fixed probability of 0.5, resulting in $0.5{\times}0.5=0.25$.
2. OR(0.5, AND(...)): Combines another p-bit (probability 0.5) with the AND result using an OR operation: P(OR) =P(0.5)+P(0.25)-P(0.5)·P(0.25)=0.5+0.25-(0.5·0.25)=0.625.

This operation uses 3 independent p-bits, each configured to produce a fixed probability output of 0.5, to obtain the desired probability of $f=0.625$.

$$1011b = \overline{0101b} + 1 \Rightarrow \ {\sim}NOT\left(AND\left(0.5, OR\left(0.5, AND(0.5,0.5)\right)\right)\right) \ \textit{p-bits x4}$$

This is a 4-bit binary representation of the probability request, corresponding to a probability of $f=11/2^4=0.6875$. The requested probability of approximately 0.6875 is generated as follows:

1. AND(0.5, 0.5): Combines two independent p-bits, each with a fixed probability of 0.5, resulting in $0.5{\times}0.5=0.25$.
2. OR(0.5, AND(...)): Combines another p-bit (probability 0.5) with the AND result using an OR operation: P(OR) =P(0.5)+P(0.25)-P(0.5)·P(0.25)=0.5+0.25-(0.5·0.25)=0.625.
3. NOT(AND(...)): Applies a NOT operation to the result, flipping it to 1-0.625=0.3751 - 0.625 = 0.3751-0.625=0.375.
4. (0101$b$) + 1: The NOT result (complement of 0101b) is incremented by 1, effectively producing 1-0.375.

This operation uses 4 independent p-bits, each producing a fixed probability of 0.5, to generate the desired probability stream with $f=0.6875$.

$$1100b = \overline{0100b} + 1 \Rightarrow \ {\sim}NOT(AND(0.5,0.5)) \ \textit{p-bits x2}$$

This is a 4-bit binary representation of the probability request, corresponding to a probability of $f=12/2^4=0.75$. The requested probability of 0.75 is generated as follows:

1. AND(0.5, 0.5): Combines two independent p-bits, each with a fixed probability of 0.5, resulting in $0.5{\times}0.5=0.25$.
2. NOT(AND(...)): Applies a NOT operation to invert the result, yielding 1-0.25=0.75.
3. (0100b) + 1: The NOT operation flips 0100b to its complement, and adding 1 effectively ensures the resulting probability is 0.75.

This process uses 2 independent p-bits to generate a probability stream approximating $f=0.75$.

$$1101b \Rightarrow= \overline{0011b} + 1 \Rightarrow \ {\sim}NOT\left(AND\left(0.5, AND\left(0.5, NOT\left(AND(0.5,0.5)\right)\right)\right)\right) \ \textit{p-bits x4}$$

This is a 4-bit binary representation of the probability request, corresponding to a probability of $f=13/2^4=0.8125$. The requested probability of approximately 0.8125 is generated as follows:

1. AND(0.5, 0.5): Combines two independent p-bits with fixed probabilities of 0.5, resulting in $0.5{\times}0.5=0.25$.
2. NOT(AND(...)): Applies a NOT operation to invert the result of the AND operation, producing 1-0.25=0.75.
3. AND(0.5, NOT(...)): Combines another p-bit (probability 0.5) with the NOT result using an AND operation: P(AND) =0.5·0.75=0.375.
4. AND(0.5, AND(...)): Combines the final result with another p-bit using another AND operation: P(AND) =0.5·0.375=0.1875 (equivalent to 0011b).
5. (0011$b$) + 1: The NOT operation flips 0011b to its complement, and adding 1 yields 1-0.1875=0.81251.

This process uses 4 independent p-bits with fixed probabilities of 0.5 to generate a probability stream with f=0.8125f.

$$1110b = \overline{0010b} + 1 \Rightarrow \sim NOT(AND(0.5,0.5,0.5))\ \textit{p-bits x3}$$

This is a 4-bit binary representation of the probability request, corresponding to a probability of $f=14/2^4=0.875$. The requested probability of 0.875 is generated as follows:

1. AND(0.5, 0.5, 0.5): Combines four independent p-bits, each with a fixed probability of 0.5, resulting in $0.5^3=0.125$.
2. NOT(AND(...)): Applies a NOT operation to invert the result of the AND, producing 1-0.125=0.875.

This process uses 3 independent p-bits with fixed probabilities of 0.5 to obtain the desired probability $f=0.875f$.

$$1111b = \overline{0001b} + 1 \Rightarrow \sim NOT(AND(0.5,0.5,0.5,0.5))\ \textit{p-bits x4}$$

This is a 4-bit binary representation of the probability request, corresponding to a probability of $f=15/2^4=0.9375$. The requested probability of 0.9375 is generated as follows:

1. AND(0.5, 0.5, 0.5, 0.5): Combines four independent p-bits, each configured to produce a fixed probability of 0.5, resulting in $0.5^4=0.0625$ (equivalent to 0001b in binary).
2. NOT(AND(...)): Applies a NOT operation to invert the result of the AND operation, yielding 1-0.0625=0.9375.
3. (0001b) + 1: The NOT operation flips 0001b to its complement, and adding 1 confirms the desired probability stream of 0.9375.

This process uses 4 independent p-bits, each configured to produce a probability of 0.5, to generate the probability of $l=0.9375$.

From these examples it is clear that a digital logic circuit may be provided which is reconfigurable such that different probability streams can be obtained.

It is important to note that multiple equivalent alternative logic functions can achieve the same result, and electronic design automation (EDA) tools typically optimize the logic to minimize it for a specific digital technology. Additionally, the number of required p-bits is always equal to or fewer than 4 and generally does not exceed N.

FIG. 3 shows a system (100) for generating a plurality of probability streams with different probabilities for a stream processing application using a simplified single-supply p-bit scheme, in accordance with embodiments of the present invention.

The system (100) comprises the following probabilistic bits (110): $P_{11}, P_{21}, ... P_{N1}, P_{12}, P_{22}, ... P_{N2}, P_{1M}, P_{2M}, ... P_{NM}$. All these probabilistic bits are supplied by a single supply $V_1$ to produce p-bits at probability 0.5.

The system (100), furthermore, comprises a digital logic circuit (120), comprising logic modules $L1, L2, ... L_{2N-1}$, configured to receive outputs from the probabilistic bits (110) and to perform logic operations on the outputs to obtain the plurality of probability streams and a stream processing module (130) configured to utilize the plurality of probability streams generated by the digital logic circuit (120) by selecting streams $S_1$ to $S_M$ from the plurality of probability streams generated by the digital logic circuit (120). In this exemplary embodiment of the present invention the stream processing (130) comprises multiplexers which are controlled by selectors $R_1$ to $R_M$. In embodiments of the present invention the logic modules involve simple basic gates, and the logic gate arrangement and multiplexer structure can be optimized using digital logic optimization tools. This contrasts with the prior art setup shown in FIG. 2, where analog supplies must be multiplexed for each p-bit, often resulting in increased area and design costs.

Reprogramming p-bits typically takes significantly longer than the delay of a few digital logic gates, enabling a much higher maximum operating frequency for the system. This increased throughput is particularly crucial for stream processing, which requires substantially higher throughput than exact processing to remain competitive.

The minimum requirement for any future p-bit technology compatible with this scheme is the ability to statically configure the bits to produce purely random outputs (e.g. with a 0.5 probability of generating a bit). This is significantly less demanding than requiring dynamic programmability during runtime.

In embodiments of the present invention maximum N times more p-bits are required compared to the prior art solution shown in FIG. 2, but, since p-bits are expected to be small, this is not as bigger penalty as muxing analogue Voltage supplies. This can also be partially addressed in error tolerant SP applications by first variation presented below.

Depending on the application, it may be possible to reduce the number of required p-bits. This may be achieved by leveraging the independence of each p-bit output and the approximate nature of the subsequent calculations.

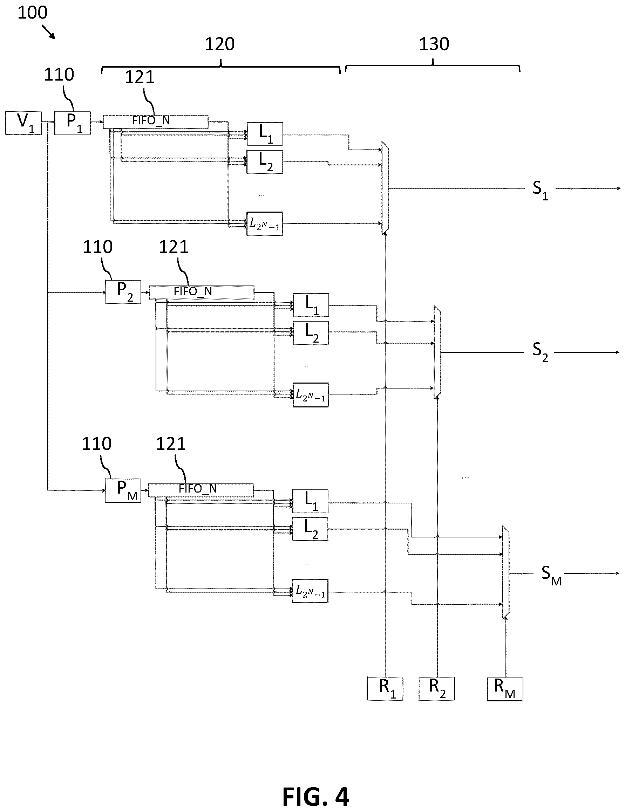

In a system or method in accordance with embodiments of the present invention this is accomplished by coupling a FIFO buffer (121) to the p-bits (110). The output of the FIFO buffer (121) is used to perform the logic operations $L1, L2, ... L_{2N-1}$. FIG. 4 shows a system (100) wherein the logic circuit (120) comprises FIFO buffers (121) in accordance with embodiments of the present invention.

In the example illustrated in FIG. 4 a separate p-bit (110) $P_1$, to $P_M$ and a separate FIFO (121) is provided per multiplexer. The logic modules *L1, L2, ... $L_{2N-1}$* which output their streams to a specific multiplexer, receive shifted versions of the p-bit output from the corresponding FIFO (121).

It should be noted that this approach may result in correlated bits at the inputs of a logic module (in an ideal p-bit this is not the case, however in a real p-bit there may be correlation). However, since a different p-bit is used per multiplexer, the output streams of the stream processing module remain entirely independent. It is an advantage of embodiments of the present invention that such output streams are applicable for a plurality of SP applications. These include scenarios involving approximate calculations or neural networks, where training can adapt to such nonidealities. In some cases, additional averaging of the output may be advantageous to achieve the same accuracy for the generated probabilities.

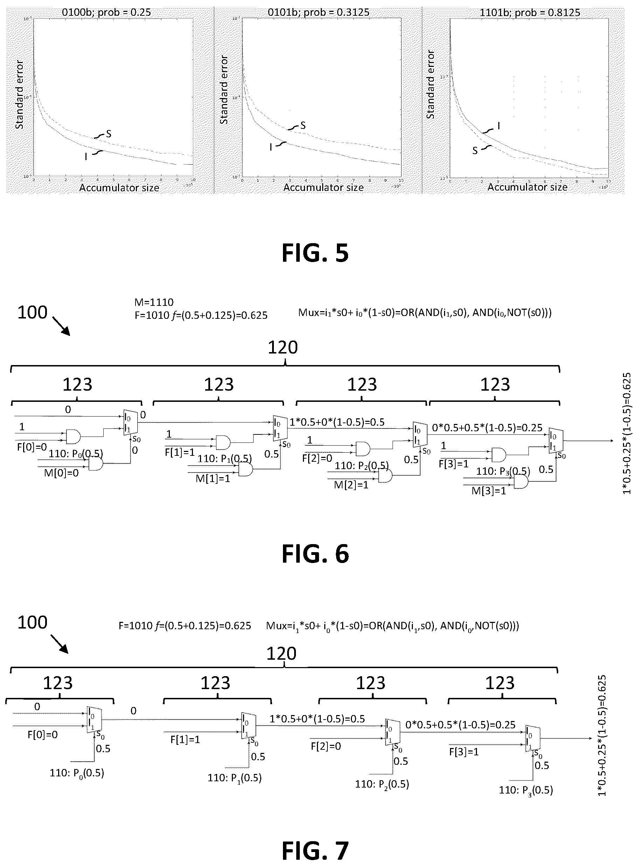

The performance comparison between independent (I) p-bits per stream and a single (S) p-bit per stream (using FIFO buffer) is illustrated in FIG. 5 for some of the 4-bit probability requests mentioned earlier.

The left graph shows the standard error in function of the accumulator size with results averaged over 1000 iterations for a probability request of 0100b corresponding with a probability of 0.25. In this context, the accumulator counts the number of ones in a stream of a given size, effectively aggregating the output samples from the p-bits. The approximate probability is calculated as the ratio of the accumulator value to the stream size, helping to reduce variability and improve the accuracy of the generated probability stream. For example, if a single p-bit or stream produces a series of random binary outputs, the accumulator counts the number of ones in the stream over a defined number of iterations. Since adding zeros does not change the count, the approximate probability is calculated as the ratio of the accumulator value to the stream size. This process smooths out random fluctuations and aligns the observed probability closer to the target probability. The larger the accumulator size (i.e., the number of samples aggregated), the smaller the standard error, resulting in a more accurate representation of the desired probability.

The middle graph shows the standard error in function of the accumulator size with results averaged over 1000 iterations for a probability request of 0101b corresponding with a probability of 0.3125.

The right graph shows the standard error in function of the accumulator size with results averaged over 1000 iterations for a probability request of 1101b corresponding with a probability of 0.8125.

Using independent p-bits generally results in lower error in most cases. However, for more complex logic functions (e.g., 1101b corresponding to a probability of 0.8125), the system can decorrelate itself to achieve comparable error performance.

In embodiments of the present invention streams for certain highly correlated probability requests (e.g., 0101b corresponding to a probability of 0.3125) may be directly generating using dedicated p-bits instead of deriving them from 0.5 probability p-bits. This is combined with the a digital logic circuit (120) which is configured to receive outputs from the at least one probabilistic bit (110) and to perform logic operations on the outputs to obtain the plurality of probability streams . While this would require a few additional carefully selected supply voltages, it serves as a hybrid approach to balance accuracy and circuit complexity.

In embodiments of the present invention the digital logic circuit (120) comprises a shuffler or XOR circuit (122) coupled to the FIFO buffer (121). A corresponding method comprises applying a shuffler or XOR circuit (140) to the stored outputs. A shuffler aims to enhance randomness or pseudo-independence in a stream of outputs. This is done by combining outputs from different time points within the stream to create a more mixed result. Ideally, each time point of a p-bit output should be independent. The idea is to leverage this property to reduce the number of required p-bits. Introducing a time delay using a FIFO buffer helps to separate these outputs further, enhancing their independence. Additionally, applying a series of XOR operations to combine outputs from different time points creates a pseudo-independent stream. This approach can also be conceptualized as functioning like a Linear Feedback Shift Register (LFSR) applied to the p-bit stream, where the state evolves "randomly" over time. In general, the process involves XORing outputs from various points within the FIFO.

In embodiments of the present invention the digital logic circuit (120) comprises at least one scaler-shifter circuit (123) that shifts and scales the fixed probability output of the at least one probabilistic bit (110). A corresponding method comprises applying the shuffler or XOR circuit (140) to the stored outputs.

The concept of the scaler-shifter is to generate an arbitrary probability with a specified precision (e.g., the $n^{th}$ bit corresponds to $0.5^{(N-n)}$, where n=0,...,N-1, and n=0 represents the least significant bit, or LSB). This is achieved using a set of p-bits, each with a probability of 0.5 (one p-bit for each bit of precision).

At each stage, the system generates one bit of precision, starting from the LSB. The generated bit is then shifted to the right, and the next stage produces the subsequent more significant bit (MSB). These stages can be connected in series (daisy-chained) to achieve the desired level of precision.

It's important to note that, under ideal conditions (disregarding p-bit reduction schemes), each stage requires a p-bit that outputs 0 or 1 with equal probability (0.5). For fewer bits of precision, the unused stages on the left can simply be disabled.

A streaming "mux," is defined as:

$$mux = i_1 p + i_0(1 - p) = OR(AND(i_1, p), AND(i_0, NOT(p)))$$

When the mux selection uses a p-bit with a probability of p=0.5, the input is effectively scaled by 0.5, which is equivalent to a right shift of the binary-valued probability request by one position. When shifting in a probability of one (if the corresponding msb of F is requested) from left, the muxing operation will right shift in the F values one at a time.

This process can be applied iteratively to systematically generate bit streams with arbitrary precision. For instance, consider a hardware setup with 4-bit precision, where the application requires only 3-bit precision (M=[1110]). FIG. 6 illustrates a hardware configuration supporting 4-bit precision, with a requested probability of F=1010 (/=0.625). The application requires only 3-bit precision (M=[1110]). The scaler-shifter operation adjusts the bit-stream generation to meet the precision requirements while maintaining the desired probability.

It is worth noting that the operation of ANDing 1 with F[0], shown for clarity (where 1 represents a stream of all ones), can be replaced by the corresponding F[0] values in practical implementation. Similarly, ANDing p-bits with M[0] and other precision-related terms is unnecessary, provided that unused higher-precision F[k] values are set to 0. This concept is illustrated in FIG. 7 which shows a scaler-shifter for arbitrary precision probability bit-stream generation, in accordance with embodiments of the present invention. A simplified case of hardware supporting 4-bit precision with a requested probability represented by F=1010F (f=0.625) is shown.

In embodiments of the present invention p-bits for unwanted higher precision bits may be shut off.

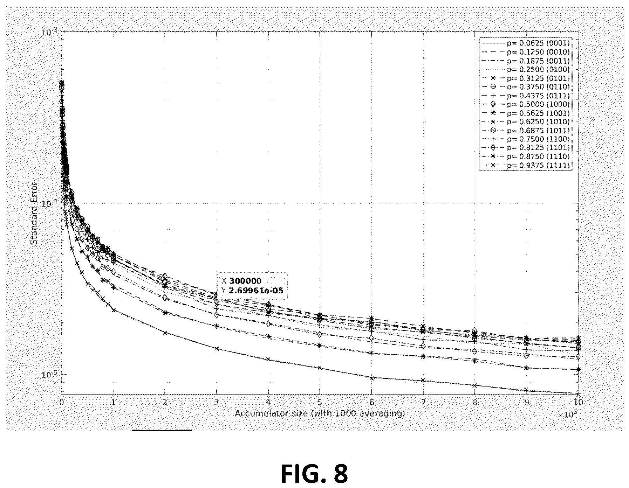

FIG. 8 shows the error in probabilities achieved with a system comprising a scaler shifter for a 4 bit case, in accordance with embodiments of the present invention.

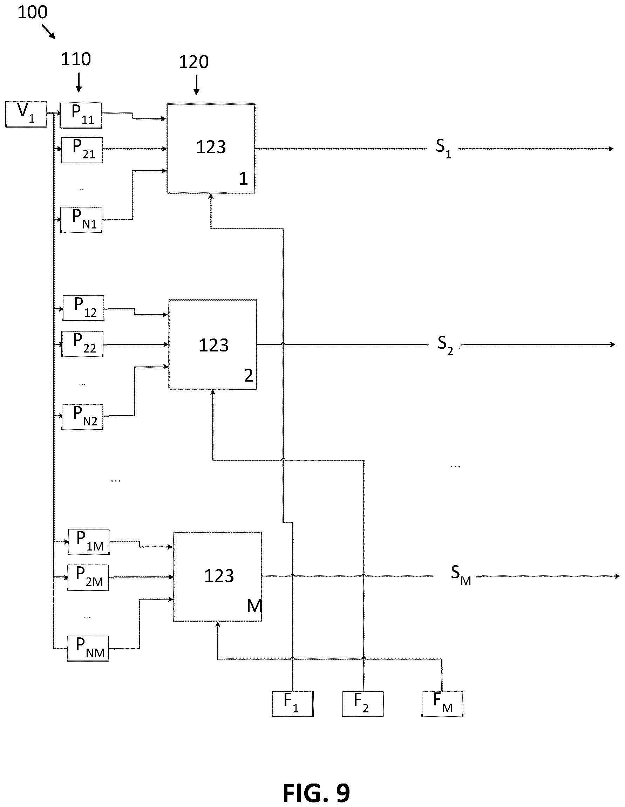

FIG. 9 shows a schematic drawing of this system (100) with single supply p-bit scheme for a stream processing application comprising a plurality of scalar shifters, in accordance with embodiments of the present invention. It shows the single supply $V_1$, the p-bits $P_{11}$ to $P_{N1}$ connected with the first phase shifter (123), the p-bits $P_{12}$ to $P_{N2}$ connected with the second phase shifter (123), the p-bits $P_{1M}$ to $P_{NM}$ connected with the $M^{th}$ phase shifter (123), and the binary encodings $F_1$, $F_2$, and $F_3$ of the requested probabilities.

This approach is less complex than previous methods, as it requires only N p-bits, where N corresponds to the maximum number of bits of precision needed for each independent stream with arbitrary precision. Additionally, the number of p-bits per circuit can be further reduced using a scheme similar to that shown in FIG. 4, applied to the setup in FIG. 9.

Other variations include using a single multiplexer unit (and p-bit) in FIG. 7, operating at 1/N throughput rate, or a single p-bit running at N-times the rate to share N bits among multiple circuits.

Different levels of precision can also be achieved by cascading the basic mux circuit in the scaler-shifter configuration, making the scaler-shifter variation highly scalable.

A system or method in accordance with embodiments of the present invention is broadly applicable to any stream processing application that has error tolerance or incorporates non-idealities into network training. It is an advantage of embodiments of the present invention that the analog design/implementation/routing of the system is much simplified with only small additional complexity in digital circuitry.

**Claims**

1. A system (100) for generating a plurality of probability streams with different probabilities for a stream processing application, comprising:

   - at least one probabilistic bit (110) configured to produce a fixed probability output,
   - a digital logic circuit (120) configured to receive outputs from the at least one probabilistic bit (110) and to perform logic operations on the outputs to obtain the plurality of probability streams.

2. The system (100) according to claim 1, comprising at least two probabilistic bits (110) configured to produce outputs with different or the same fixed probabilities, wherein the digital logic circuit (120) is configured to receive outputs from the at least two probabilistic bits (110) and perform logic operations on them.

3. The system (100) according to claim 1, wherein the digital logic circuit (120) comprises a FIFO buffer (121) configured to receive the output from the at least one probabilistic bit (110) and use the output of the FIFO buffer (121) to perform the logic operations.

4. The system (100) according to claim 3, wherein the digital logic circuit (120) comprises a shuffler or XOR circuit (122) coupled to the FIFO buffer (121).

5. The system (100) according to any of the previous claims, wherein the digital logic circuit (120) comprises at least one scaler-shifter circuit (123) that shifts and scales the fixed probability output of the at least one probabilistic bit (110).

6. The system (100) according to any of the previous claims, wherein in case of more than one scaler-shifter circuit (123), the scaler-shifter circuits (123) are connected in series.

7. The system (100) according to any of the previous claims, the system (100) comprising a stream processing module (130) configured to utilize the plurality of probability streams generated by the digital logic circuit (120).

8. The system (100) according to any of the previous claims wherein the digital logic circuit (120) is reconfigurable such that different probability streams can be obtained.

9. The system (100) according to any of the previous claims wherein the at least one probabilistic bit (110) has the fixed probability output of 0.5.

10. A method (200) for generating a plurality of probability streams with different probabilities in a stream processing application, the method (200) comprising:

   - generating (210) at least one fixed probability output using at least one probabilistic bit (110),
   - performing (220) logic operations on the at least one fixed probability output using a digital logic circuit (120) to obtain the plurality of probability streams with different probabilities.

11. The method (200) according to claim 10, comprising:

   - storing outputs from the at least one probabilistic bit (110) in a FIFO buffer (130), and
   - using the output of the FIFO buffer (121) to perform the logic operations.

12. The method (200) according to claim 11, comprising applying a shuffler or XOR circuit (140) to the stored outputs.

13. The method according to claim 10, comprising applying a scaler-shifter operation to the at least one fixed probability output.

14. The method according to any of the claims 10 to 14, comprising providing (230) the generated plurality of probability streams to a stream processing module (160), and performing stochastic computations using the plurality of probability streams.

V0

V(EN)

115

111

113

N1

V(OUT)

112

114

**FIG. 1 (prior art)**

$V_1$

$V_2$

$V_{2^N-1}$

$P_1$ —— $S_1$ ——→

$P_2$ —— $S_2$ ——→

$P_M$ —— $S_M$ ——→

$R_1$    $R_2$    $R_M$

**FIG. 2 (prior art)**

100

110          120                    130

V₁    P₁₁          L₁

      P₂₁          L₂                                    S₁

      ...

      P_N1

                   L_{2^N-1}

      P₁₂          L₁

      P₂₂          L₂                                    S₂

      ...

      P_N2

                   L_{2^N-1}

                                              ...

      P_1M         L₁

      P_2M         L₂

      ...                                               S_M

      P_NM

                   L_{2^N-1}

                   R₁        R₂        R_M

## FIG. 3

**FIG. 4**

FIG. 5

FIG. 6

FIG. 7

**FIG. 8**

FIG. 9

200

210 | Generating fixed probability output

220 | Logic operations

230 | Stream processing

# FIG. 10

Europäisches
Patentamt

European
Patent Office

Office européen
des brevets

# EUROPEAN SEARCH REPORT

**Application Number**

EP 24 21 9490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENG YANG ET AL: "Design of accurate stochastic number generators with noisy emerging devices for stochastic computing", COMPUTER-AIDED DESIGN, IEEE PRESS, 445 HOES LANE, PO BOX 1331, PISCATAWAY, NJ08855-1331USA, 13 November 2017 (2017-11-13), pages 638-644, XP058398056, | 1-3, 5-11,13, 14 | INV. G06F7/58 G06F7/70 |
| Y | * Section I, II * | 4,12 | |
| X | ARMIN ALAGHI ET AL: "Survey of Stochastic Computing", ACM TRANSACTIONS ON EMBEDDED COMPUTING SYSTEMS, ACM, NEW YORK, NY, US, vol. 12, no. 2s, 1 May 2013 (2013-05-01), pages 1-19, XP058018698, ISSN: 1539-9087, DOI: 10.1145/2465787.2465794 | 1-3, 5-11,13, 14 | |
| Y | * Section 1-4 * | 4,12 | |
| Y | US 2019/121839 A1 (MOHAJER SOHEIL [US] ET AL) 25 April 2019 (2019-04-25) * paragraph [0039] - paragraph [0067]; figures 1-4 * | 4,12 | **TECHNICAL FIELDS SEARCHED (IPC)** G06F |

The present search report has been drawn up for all claims

| Place of search | Date of completion of the search | Examiner |
|---|---|---|
| Munich | 7 May 2025 | Prins, Leendert |

## ANNEX TO THE EUROPEAN SEARCH REPORT
## ON EUROPEAN PATENT APPLICATION NO.

EP 24 21 9490

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | Publication date |
|---|---|---|---|
| US 2019121839 A1 | 25-04-2019 | NONE | |

EPO FORM P0459

For more details about this annex : see Official Journal of the European Patent Office, No. 12/82